# FASCICULE DE BREVET EUROPEEN

(11) **EP 4 363 142 B1**
(45) Date de publication et mention de la délivrance du brevet: **06.08.2025**
(21) Numéro de dépôt: 22734281.3
(22) Date de dépôt: 15.06.2022
(51) Int. Cl.: B23B 35/00, B23B 47/34

(54) **PROCÉDÉ DE PERÇAGE DE PIÈCES DE STRUCTURE À ASSEMBLER ET OUTIL DE PERÇAGE**
VERFAHREN ZUM BOHREN VON ZUSAMMENZUBAUENDEN BAUTEILEN UND BOHRWERKZEUG
METHOD OF DRILLING STRUCTURE PIECES TO BE ASSEMBLED AND DRILLING TOOL

(30) Priorité: 28.06.2021 FR 2106900
(43) Date de publication de la demande: 08.05.2024
(73) Titulaire: Latecoere, 31500 Toulouse (FR)
(72) Inventeur: MARCHARD, Daniel, 31200 Toulouse (FR); MONET, Nicolas, 31100 Toulouse (FR); BOUTIER, Dominique, 31700 Blagnac (FR)
(74) Mandataire: Junca, Eric
(86) Numéro de dépôt international: PCT/EP2022/066403
(87) Numéro de publication internationale: WO 2023/274736

(56) Documents cités:
- EP-A1- 0 832 722
- EP-A2- 1 627 705
- WO-A2-2013/133187
- DE-A1- 1 704 296

## Description

### DOMAINE TECHNIQUE

L'invention se rapporte à un procédé de perçage de pièces de structure (panneaux, cloisons, tronçons, etc.) agencées en position d'assemblage, et à un outil de perçage étanche permettant d'évacuer l'intégralité des copeaux produits lors du perçage sans polluer l'environnement de travail. Tout type d'installation comportant des structures assemblées sont destinées à pouvoir suivre ce procédé et à utiliser cet outil de perçage étanche, notamment les véhicules tels que les aéronefs, les trains, les navires, et les bâtiments de construction. L'invention s'applique également au perçage d'une seule pièce de structure à fixer sur un support ou à assembler à tout équipement.

Ainsi, dans le domaine aéronautique, tout aéronef est constitué de structures assemblées pour en former l'architecture. L'assemblage de ces structures repose sur des méthodes dites « classiques » dans lesquelles les structures sont d'abord percées avant la pose de fixations, et cette étape de perçage produit une grande quantité de copeaux d'usinage qu'il faut ensuite évacuer pour nettoyer les structures.

Certaines de ces structures, telles que les portes, sont situées dans des zones difficiles d'accès par leur complexité de forme et leur exiguïté : des techniques de perçage spécifiques s'appuient alors sur des machines capables de venir au contact de chaque face de la matière à percer.

### ÉTAT DE LA TECHNIQUE

Traditionnellement, lors de l'assemblage de pièces de structure en particulier dans le domaine aéronautique, celles-ci sont d'abord montées une première fois puis maintenues en position de montage au moyen d'épingles lors d'une étape préalable d'épinglage avant d'être percées. Ce perçage traverse les pièces et produit alors de nombreux copeaux d'usinage qui se répandent au voisinage de l'alésage ainsi percé. Cet environnement doit alors être nettoyé et ce nettoyage requiert un démontage complet de l'assemblage car les pièces sont ensuite soumises à un traitement de surface. Ce traitement a pour but principal de lisser la surface des pièces et produit donc également des résidus qu'il faut aussi nettoyer. Classiquement du mastic d'interposition est appliqué à l'interface des pièces à assembler, afin d'éviter tout espace libre entre les pièces, avant de les monter à nouveau et de procéder à un second épinglage de positionnement. La dernière étape correspond à l'assemblage des pièces, en général par rivetage.

Un perçage de structures aéronautiques est donc réalisé lors des premières étapes d'assemblage de ces structures et au moins deux étapes de nettoyages sont nécessaires pour éliminer les copeaux produits lors de l'assemblage. De plus le mastic d'interposition utilisé doit être appliqué sur des interfaces propres car il ne peut être contaminé par des résidus sous peine de devoir être remplacé.

Ces nettoyages successifs représentent des tâches minutieuses coûteuses en temps et qui ne peuvent être évitées à cause de la production de copeaux et de déchets lors de l'usinage.

Une autre problématique liée à ce type d'installation est la répétition des montage-démontage-remontage successifs des structures à assembler : chaque montage s'accompagne d'un épinglage afin de mettre en positions les pièces de structure. Outre le temps nécessaire pour mener à bien ces étapes, le remontage peut présenter des problèmes pour l'assemblage : le perçage étant réalisé lors du premier montage, le démontage puis remontage ne garantissent pas que les trous percés soient de nouveau correctement alignés en vis-à-vis, ce qui aurait pour conséquence des problèmes de qualité, induisant des usinages et nettoyages supplémentaires.

Afin de récupérer des copeaux, il est connu du document US2021069844 A1 une perceuse munie d'une chambre d'aspiration ajustable autour du foret de perçage, cette chambre venant au contact de la surface à percer pour cloisonner l'espace de perçage. Mais une telle chambre d'aspiration est volumineuse et n'est donc pas adaptée pour percer des trous dans des zones exigües.

Par ailleurs, le document EP0832722A1, qui divulgue un procédé de perçage selon le préambule de la revendication 1 et un outil de perçage selon le préambule de la revendication 7, illustre une machine de perçage de type « C-clamp » dont la pince (« clamp » en terminologie anglaise) lui permet d'enserrer les structures à assembler et procéder au perçage dans des zones de faible accessibilité. Cependant cet outil ne permet pas d'évacuer les copeaux qui se répandent dans le voisinage du trou percé, nécessitant alors un démontage pour effectuer le nettoyage.

Pour résoudre les problèmes d'accessibilité, une perceuse communément utilisée est agencée dans l'une des branches d'une pince venant de part et d'autre des éléments de structure à percer. Ce type de perceuse dispose d'un soufflage ainsi que d'un système d'aspiration via des goujures sur le foret de perçage pour l'évacuation des copeaux. Cette évacuation des copeaux est nécessaire pour satisfaire aux niveaux élevés de qualité de perçage requis, en particulier dans le domaine aéronautique, et éviter un élargissement non souhaité de l'alésage dû à l'accumulation des copeaux dans l'alésage.

Cependant, l'aspiration des copeaux n'est pas totale : une partie des copeaux est éjectée à l'entrée de l'alésage via des rainures radiales réalisées sur le nez-machine, partie avant de la perceuse en contact avec la structure, ces rainures ayant pour fonction première de permettre un flux d'aspiration des copeaux. De plus lors du débouchage, c'est-à-dire lorsque le trou percé devient traversant, se produit une éjection soudaine des copeaux en sortie de l'alésage à travers la seconde branche de la pince, provoquant alors des bavures de sortie et polluant la zone de travail. La branche de la pince en sortie d'alésage est creuse et ouverte sur l'extérieur pour l'évacuation des copeaux dont l'accumulation, même limitée, peut entraîner la rupture du foret de perçage, des problèmes de précision, de délai et de qualité de perçage.

### EXPOSE DE L'INVENTION

Afin de remédier aux inconvénients de l'état de la technique exposés ci-dessus, l'invention a pour objectif principal de récupérer et de contrôler l'évacuation de l'ensemble des copeaux générés lors du perçage, avant que ceux-ci ne se répandent dans l'environnement autour de l'alésage formé, permettant ainsi de s'affranchir de coûteuses étapes de démontage/remontage des structures à assembler. Le terme « amont » signifie « provenant du côté où s'initie le perçage et « aval » se rapporte au côté où l'alésage devient débouchant, chaque côté étant défini de part et d'autre de la ou des pièces à percer. De plus, « un soufflage amont » qualifie un soufflage provenant de l'amont et dirigé vers l'aval, alors qu'un soufflage aval qualifie un soufflage en sens inverse, c'est-à-dire dirigé de l'aval vers l'amont.

Pour ce faire, l'invention prévoit de mettre en œuvre un procédé de perçage de pièces à assembler et de récupération des copeaux à l'aide d'une perceuse montée sur une branche de pince, utilisant un soufflage aval et s'affranchissant de l'éjection radiale amont des copeaux afin d'en réaliser une évacuation étanche.

Plus précisément, la présente invention a pour objet un procédé de perçage d'au moins un alésage dans une ou plusieurs pièces positionnées selon la revendication. Ces pièces sont empilées puis enserrées entre des branches amont et aval d'une pince d'un outil de perçage. La branche amont accueille une perceuse munie d'un foret et la branche aval est creuse et ouverte sur l'extérieur. Un soufflage dit amont dirigé vers les pièces à assembler fait circuler de l'air à travers le foret puis en sens inverse dans des goujures latérales s'étendant le long de ce foret.

Le perçage se déroule selon les étapes suivantes :
- mise en place de la pince de l'outil de perçage sur une localisation de perçage de la ou des pièces;
- choix et montage du foret correspondant à un diamètre de l'alésage à percer, puis mise en place du foret en position d'activation ;
- déclenchement du soufflage amont d'air sous pression ;
- début de l'avancée de la perceuse dans le sens amont et déclenchement d'un soufflage aval d'air sous pression, le soufflage aval étant réalisé dans un environnement étanche dans la branche aval creuse de la pince de l'outil de perçage et en sens inverse dudit soufflage amont ;
- avancée de la perceuse dans le sens aval dans les pièces en formant des copeaux jusqu'au débouchage de l'alésage, extraction des copeaux en sens amont via les goujures du foret puis évacuation de ces copeaux dans un environnement étanche ;
- retrait du foret de l'alésage ;
- maintien des soufflages après débouchage et retrait du foret de l'alésage, le soufflage aval maintenant les copeaux dans l'alésage pour leur aspiration complète, puis arrêt des soufflages, et
- désinstallation de la pince de l'outil de perçage.

On entend par débouchage l'état de perçage de la ou de la dernière pièce percée à l'instant où l'alésage devient totalement traversant ou débouchant, le diamètre de l'alésage étant alors constant sur toute sa longueur.

Avantageusement, les copeaux produits sont tous aspirés par la pince amont du fait de l'étanchéité de leur évacuation et ne deviennent pas des débris ou des résidus qui viendraient se répandre, s'accumuler et s'insérer sur les pièces de structure ou d'autres surfaces du voisinage, contrairement au procédé classique. La combinaison du soufflage aval et de l'évacuation amont en environnement étanche selon l'invention permet donc de s'affranchir d'étapes intermédiaires de nettoyage et de démontage/remontage, ce qui génère un gain de temps substantiel à l'assemblage. De plus, le perçage étant effectué avant l'assemblage, sans étape intermédiaire de démontage/remontage, les alésages de chaque pièce à assembler sont donc directement et correctement alignés sans avoir besoin d'ajuster le positionnement de chacune de ces pièces, ce qui favorise également un assemblage rapide et précis de l'ensemble.

Dans certaines formes de mise en œuvre privilégiées :
- l'évacuation des copeaux est réalisée par aspiration ;
- dans le cas où les pièces sont destinées à être assemblées, elles sont préalablement épinglées après l'empilage et assemblées après le perçage ;
- le soufflage aval d'air sous pression est déclenché avant le début de l'avancée de la perceuse ;
- suite au retrait du foret de l'alésage, le foret peut être changé pour un autre de diamètre supérieur pour augmenter le diamètre de l' alésage ;
- après désinstallation de la pince de l'outil de perçage, celle-ci peut être déplacée et mise en place en différentes localisations pour procéder au perçage d'autres alésages et à l'assemblage des pièces de structures en différents points.

Avantageusement déclencher le soufflage aval avant le début de l'avancée de la perceuse procure un gain de temps et une facilité de réalisation car l'avancée de la perceuse jusqu'au débouchage se réalise généralement en une seule étape. En effet, le soufflage aval ayant pour but d'éviter l'éjection des copeaux dans la branche aval lors du débouchage, ce déclenchement préalable du soufflage aval repousse tout copeau ou autre résidu dans la branche amont via les goujures du foret.

Avantageusement également, le procédé de perçage est réitérable soit en changeant le foret pour agrandir l'alésage, soit en déplaçant la pince de perçage étanche pour réaliser un nouvel alésage. Le changement du foret suite au retrait de la perceuse tout en maintenant la pince de perçage étanche en position améliore la précision lors du perçage d'un alésage de diamètre important requérant de percer un premier alésage dit avant-trou qui est ensuite agrandi lors de l'utilisation d'un foret de diamètre supérieur.

L'invention se rapporte également à un outil de perçage d'au moins une pièce de structure selon la revendication 7, comportant la perceuse équipée du foret muni des goujures latérales d'extraction de copeaux et du moyen de soufflage amont d'air sous pression à travers un axe central du foret. L'outil comporte de plus la pince à deux branches qui viennent enserrer la ou les pièce(s) par une extrémité ouverte sur chacune des branches. La branche aval accueille de manière étanche par son extrémité ouverte un organe de soufflage aval d'air sous pression dans le sens inverse et avec une pression de travail au moins égale à celle du soufflage amont afin de repousser les copeaux lorsque l'alésage est débouchant. L'outil de perçage est également muni d'un organe étanche d'évacuation et de récupération de copeaux coopérant avec les goujures latérales d'extraction et d'un nez-machine étanche agencé à l'extrémité ouverte de la branche amont et au contact de la pièce de structure à percer.

Avantageusement, la combinaison du nez-machine étanche et du soufflage d'air aval clôt ainsi hermétiquement la zone de perçage et les copeaux ont donc comme unique voie de sortie l'extraction par les goujures latérales de la perceuse puis par l'organe d'évacuation. De plus, le soufflage d'air dans la branche aval repousse lors du débouchage le flux des copeaux vers la branche amont de la pince et vers la zone d'aspiration et d'évacuation-récupération. La contamination de la ou des pièces de structure par les copeaux est ainsi totalement évitée, en particulier celle du mastic d'interposition. Les étapes de nettoyage et par conséquent celles de démontage/remontage n'étant plus nécessaires, un gain en productivité est généré.

Selon certains modes de réalisation préférés :
- pour réaliser l'étanchéité, la rigidité du nez-machine est inférieure à celle de la ou des pièces de structure à percer pour en épouser la forme de manière passive et/ou un mécanisme de serrage le maintient sur la ou les pièces de structure choisi parmi un système hydraulique, pneumatique et électrique ;
- l'air des soufflages amont et aval provient d'un même réseau d'air comprimé, en particulier à au moins 6 bars ;
- dans le cas où l'évacuation est réalisée par aspiration, une dépression d'au moins 0,1 bar est établie dans l'organe d'évacuation ;
- le soufflage d'air peut contenir un lubrifiant qui est évacué au même titre que les copeaux , et
- la pince peut être choisie parmi une pince de type C-Clamp, de type J-Clamp et une pince à ressort.

### PRESENTATION DES FIGURES

D'autres caractéristiques et avantages de la présente invention ressortiront à la lecture qui suit d'un exemple de réalisation détaillé sans en limiter la portée, en référence aux figures annexées qui représentent, respectivement :
- la figure 1, une vue en perspective coupée de deux pièces de structures en cours d'assemblage ;
- la figure 2, une vue en coupe des parois des pièces à percer selon un plan perpendiculaire aux parois, lors de la mise en place de l'outil de perçage ;
- la figure 3, la vue en coupe selon la figure 2 en début du perçage ;
- la figure 4, la vue en coupe selon la figure 2 en cours de perçage ;
- la figure 5, la vue en coupe selon la figure 2 lorsque le perçage est sur le point de devenir débouchant ;
- la figure 6, la vue en coupe selon la figure 2 lorsque le perçage est débouchant ;
- la figure 7, la vue en coupe selon la figure 2 à la fin du perçage ;
- la figure 8, la même vue en coupe détaillée de l'alésage devenu débouchant, et
- la figure 9, un exemple de logigramme détaillant les étapes du procédé.

### DESCRIPTION DETAILLEE

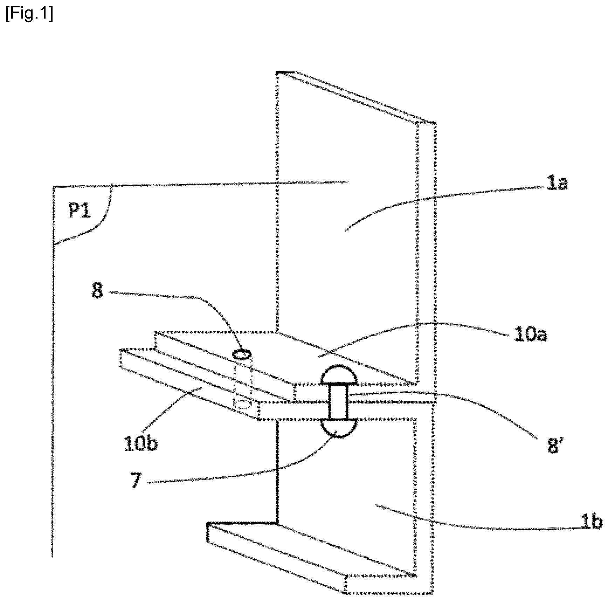

La figure 1 représente une vue en perspective coupée selon le plan P1 de deux pièces métalliques lors de leur assemblage, composé d'une pièce amont 1a et d'une pièce aval 1b, « amont » et « aval » distinguant la première pièce à percer (en amont) de la seconde (en aval). Ces pièces 1a, 1b correspondent dans l'exemple à des portions de tronçons adjacents de fuselage d'un aéronef à riveter. Elles possèdent chacune une paroi plane 10a et 10b, ces parois étant positionnées l'une contre l'autre pour être montées par empilage et épinglage.

Puis les parois 10a, 10b sont percées selon le procédé de l'invention pour réaliser, dans cet exemple, deux trous de perçage 8 et 8'. Le trou de perçage 8' (vu en coupe) est utilisé, dans l'exemple illustré, pour sertir un rivet 7 d'assemblage des deux parois 10a et 10b. Un mode de réalisation d'un outil de perçage 100 mis en œuvre pour percer deux pièces de structure de parois 10a et 10b est détaillé dans les figures suivantes.

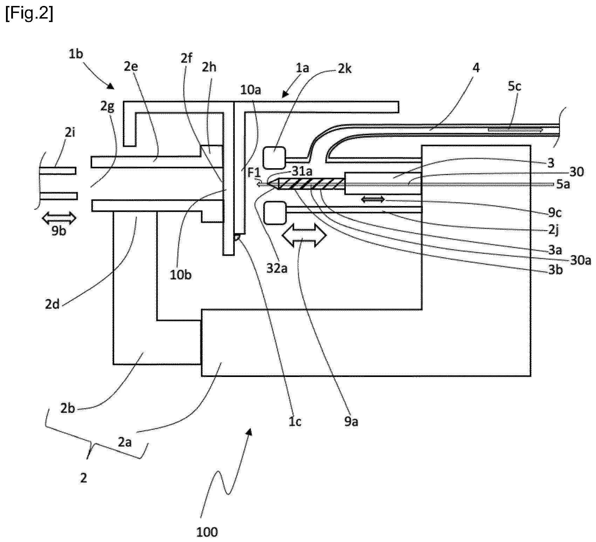

La vue en coupe de la figure 2 selon le plan P1 de la figure 1, perpendiculaire aux parois 10a et 10b, montre plus précisément les éléments constitutifs de l'outil de perçage 100 ainsi que sa mise en place sur la localisation souhaitée afin de procéder au perçage (dont le résultat final apparaît en figure 1). L'outil est construit autour d'une pince 2 de type C-clamp de perçage étanche selon l'exemple illustré, composée d'une branche amont 2a et d'une branche aval 2b. Ces deux branches sont solidaires et viennent enserrer les pièces amont 1a et aval 1b à assembler, plus précisément les parois amont 10a et aval 10b, par l'appui 2h et le nez-machine 2k. Du mastic d'interposition 1c a été enduit à la jonction entre les pièces amont 1a et aval 1b afin de combler les défauts d'usinage des pièces et de les jointer.

La branche aval 2b est fixe et comporte à son extrémité 2d une conduite creuse aval 2e formant une extrémité ouverte et présentant deux bornes d'extrémité 2f et 2g. L'appui 2h établit à la borne 2f un contact étanche avec la paroi d'assemblage 10b de la pièce aval 1b et l'autre borne 2g d'ouverture de la conduite creuse aval 2e accueille de manière étanche selon la direction 9b un organe de soufflage d'air aval 2i. Ce tuyau 2i amène un flux d'air sous pression dans la conduite creuse aval 2e.

La branche amont 2a comporte une conduite creuse amont 2j coulissante selon la direction 9a formant une extrémité ouverte parallèle à la direction 9b, pour engager le nez-machine 2k agencé à cette extrémité ouverte de la branche amont 2a et au contact de la paroi 10a de la pièce amont 1a de structure à percer. Ce nez-machine 2k est constitué d'un matériau de rigidité inférieure à celle de la pièce 1a et maintient l'étanchéité du contact de manière passive. La conduite creuse amont 2j loge d'une part la perceuse 3 dans sa cavité et d'autre part une voie 4 d'évacuation emmanchée dans sa périphérie constituant un organe étanche d'évacuation et de récupération coopérant avec les goujures latérales 3b d'extraction et le nez-machine 2k étanche.

La perceuse 3, équipée d'un foret 3a, est mobile selon la direction 9c, permettant lorsque la conduite creuse amont 2j est au contact avec la paroi 10a de la pièce amont 1a, de faire avancer le foret 3a pour réaliser le perçage à travers les parois 10a et 10b, respectivement des pièces amont 1a et aval 1b. Ce foret 3a est muni de goujures latérales 3b d'extractions de copeaux s'enroulant hélicoïdalement le long du foret 3a qui, combinées au soufflage d'air sous pression amont 5a à travers l'axe central 30a du foret 3a, extraient les copeaux 6 formés lors du perçage en les remontant pour qu'ils soient évacués par aspiration dans la voie d'évacuation 4. L'air sous pression du soufflage amont 5a provenant d'un compresseur (non représenté) est dirigé selon la flèche F1 à travers un axe central 30 de la perceuse 3 aligné sur l'axe central 30a du foret 3a, jusqu'à l'extrémité 31a de la pointe conique de foret 32a. Cet air de soufflage amont 5a peut optionnellement contenir un lubrifiant qui est ultérieurement aspiré et évacué en même temps que les copeaux.

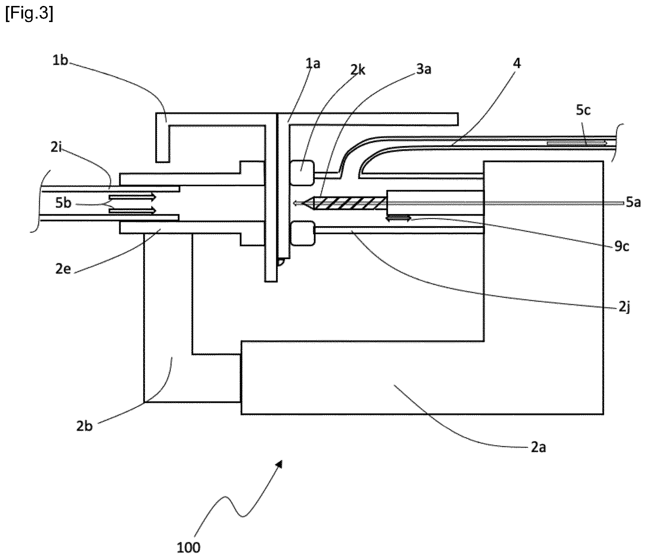

La vue en coupe de la figure 3 illustre la mise en place de l'outil de perçage 100 : les branches amont 2a et aval 2b maintiennent alors de manière étanche les parois 10a et 10b des pièces amont 1a et aval 1b, et le foret 3a arrive à proximité de la paroi amont 1a pour débuter le perçage. Le soufflage amont 5a est déclenché et propulsé dans l'axe 30a du foret 3a de l'air à 6 bars. L'aspiration d'air (flèche 5c) est avantageusement renforcée par une dépression de 0,5 bar créée à une extrémité éloignée (non représentée). D'autres valeurs de dépression peuvent être utilisées, par exemple entre 0,1 bar et 1 bar.

Le tuyau de soufflage aval 2i est installée dans la conduite creuse aval 2e, permettant d'étanchéifier complètement cette conduite. Dans cet exemple de réalisation, le soufflage aval (flèches 5b) est déclenché au démarrage du perçage et le tuyau de soufflage aval 2i est relié au même réseau d'air comprimé que le soufflage amont 5a, et donc propulse de l'air sous pression comprimé également à 6 bars dans cet exemple. Le soufflage aval (flèches 5b) peut également être déclenché ultérieurement après le démarrage du perçage et avant qu'il ne devienne débouchant, c'est-à-dire avant que le foret 3a ne traverse totalement les deux parois amont 1a et aval 1b. Le perçage s'effectue alors en deux étapes : une première étape avant de déboucher puis une deuxième étape à partir de l'instant de débouchage. Il est cependant avantageux de déclencher le soufflage aval (flèches 5b) avant le démarrage du perçage de sorte à fusionner les deux étapes en une seule étape.

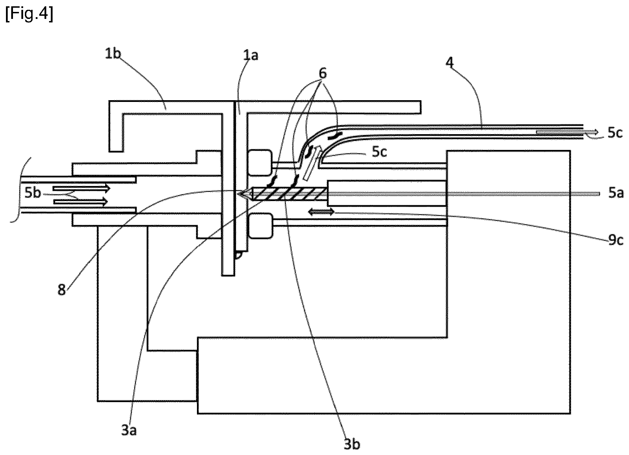

La vue en coupe de la figure 4 documente le début du perçage : le foret 3a creuse le trou 8 dans la paroi amont 1a et les copeaux 6, emportés par l'air issu du soufflage amont 5a sont extraits du trou 8 en suivant les goujures latérales 3b, puis aspirés dans la voie d'évacuation 4. En effet, l'air provenant du soufflage amont 5a produit une aspiration en sens inverse au soufflage amont 5a via les goujures le long du foret avant d'être aspirés dans la voie d'évacuation 4 par la dépression (flèches 5c) créée dans cette voie. Le soufflage amont 5a et le soufflage aval 5b sont maintenus sous 6 bars pendant tout le perçage.

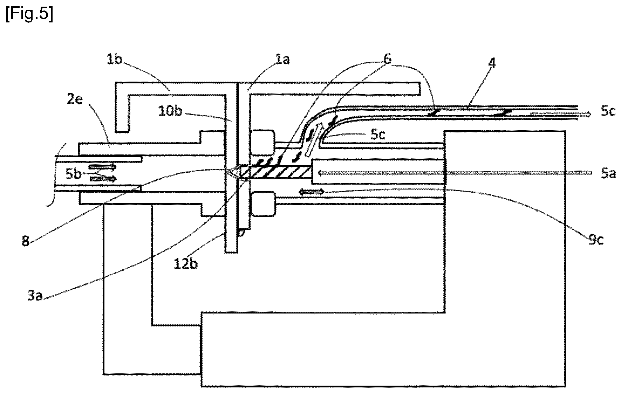

Dans la vue en coupe de la figure 5, le perçage est presque débouchant sur la face aval 12b de la paroi 10b de la pièce aval 1b, et il ne reste qu'une mince couche de matière dans le trou 8 avant que le foret 3a ne soit débouchant sur cette face 12b. Si le soufflage aval 5b n'a pas été déclenché en début de perçage, la progression du foret 3a est arrêtée pour éviter une expulsion des copeaux 6 dans la conduite creuse aval 2e sous l'action du soufflage amont 5a lors du débouchage.

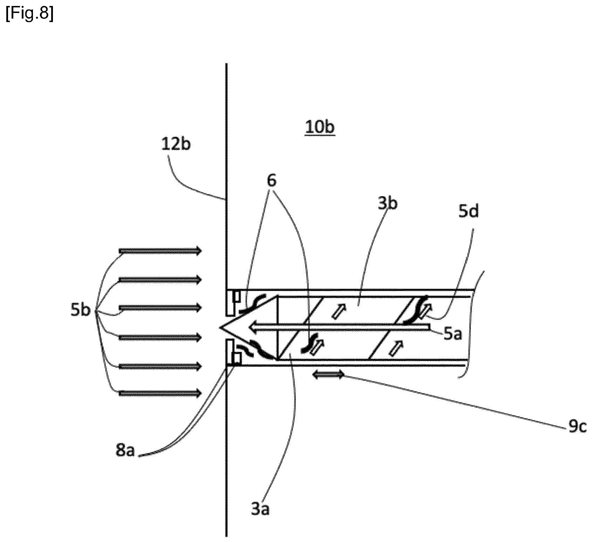

Le débouchage est illustré dans la vue en coupe détaillée de la Figure 8 : le foret 3a a commencé à perforer la face aval 12b de la paroi aval 10b et il ne reste que des languettes 8a dans le trou 8 percé sous forme d'alésage 8b dans la paroi aval 10b. Les copeaux 6 sont maintenus dans l'alésage 8b par la pression du soufflage aval 5b qui est égale à la pression du soufflage amont 5a, permettant ainsi l'extraction (flèches 5d) des copeaux par les goujures 3b avant d'être aspirés pour évacuation (flèches 5c, cf. figures 4 et 5).

Dans cet exemple de réalisation l'air du soufflage amont 5a et l'air du soufflage aval 5b proviennent du même réseau d'air comprimé par un compresseur commun et sont donc à la même pression : il est cependant possible d'utiliser pour le soufflage aval 5b une pression supérieure à celle du soufflage amont 5a. Dans tous les cas, la pression de travail du soufflage aval est en sens inverse et au moins égale à celle du soufflage amont pour être apte à repousser tout copeaux ou partie de copeaux en aval de la face 12b dans l'alésage 8b lorsque l'alésage est débouchant et donc créer un fond étanche « virtuel » aux copeaux et ses dérivés : ces résidus ne peuvent donc sortir de l'alésage 8b que par les goujures 3b avant d'être aspirés.

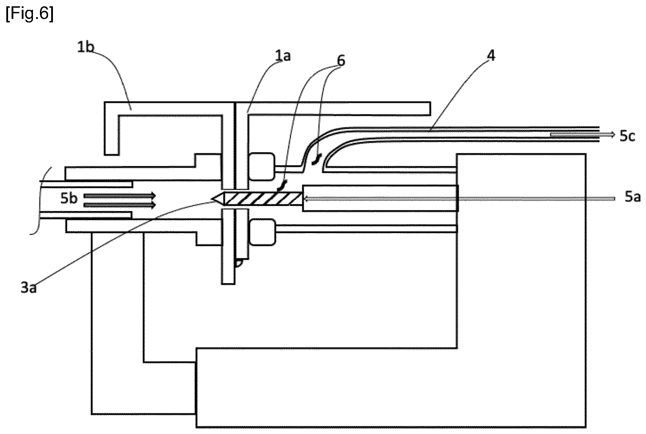

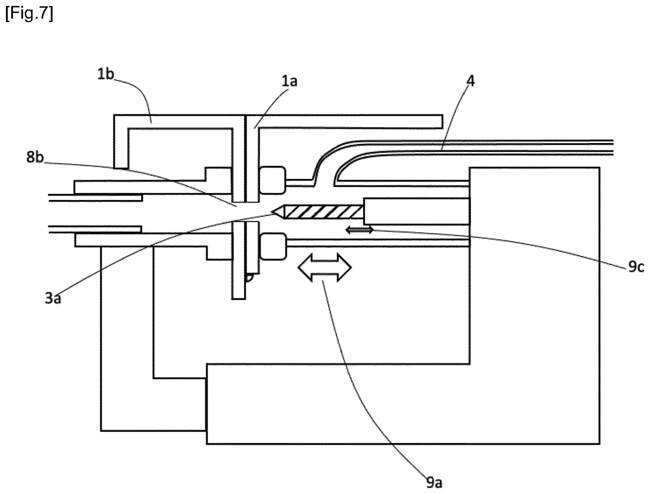

Dans la vue en coupe de la figure 6, le foret 3a est entièrement traversant et les derniers copeaux 6 sont évacués dans la voie d'aspiration 4. Les soufflages amont 5a et aval 5b, ainsi que l'aspiration 5c sont maintenus pour aspirer l'ensemble des copeaux issus du perçage jusqu'au retrait du foret 3a qui revient dans sa position initiale par déplacement parallèle à la direction 9c, tel qu'illustré dans la figure 7. La conduite creuse amont 2j est ensuite déplacée selon la direction 9a, parallèle à la direction 9c, pour libérer les pièces de structures amont 1a et aval 1b du C-clamp 2. Cette pince 2 est alors être positionnée en différentes localisations pour percer d'autres alésages. Le foret 3a peut également être échangé avec un autre de diamètre supérieur afin de procéder à un perçage de plus grand diamètre ou d'agrandir progressivement le diamètre d'un l'alésage précédemment percé.

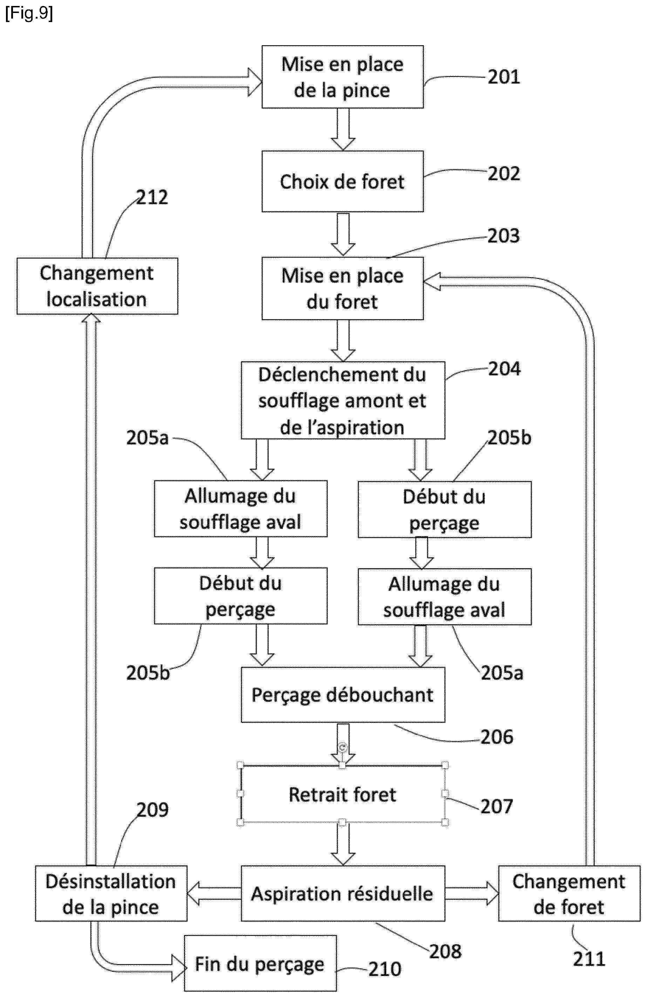

La figure 9 présente le logigramme du procédé de perçage d'un alésage 8b dans deux pièces de structures 1a et 1b positionnées l'une contre l'autre en vue de leur assemblage : ces pièces 1a et 1b sont empilés puis épinglées et enserrées entre les branches amont 2a et aval 2b de la pince 2 d'un outil de perçage 100. La branche amont 2a accueille une perceuse 3 munie d'un foret 3a et la branche aval 2b est creuse et ouverte sur l'extérieur à son extrémité 2d. Le soufflage amont 5a, dirigé vers les pièces 1a et 1b à assembler, fait circuler de l'air à travers le foret 3a puis en sens inverse dans les goujures s'étendant le long du foret 3a.

Le procédé de perçage débute par la mise en place de la pince 2 de l'outil de perçage 100 sur la localisation de perçage souhaitée (étape 201) des pièces 1a et 1b, par le choix et le montage du foret 3a correspondant au diamètre de l'alésage 8b à percer (étape 202), ainsi que de la mise en place du foret 3a en position d'activation (étape 203).

Après la mise en place de l'outil de perçage 100, l'opérateur procède au déclenchement des flux d'air amont (étape 204), à savoir le soufflage amont 5a d'air sous pression et de l'aspiration 5c, avant de procéder dans cet exemple de réalisation au déclenchement du soufflage aval 5b d'air sous pression (étape 205a) puis au début de l'avancée de la perceuse 3 (étape 205b) permettant ainsi d'aspirer les copeaux 6 issus du perçage. Le soufflage aval 5b est réalisé dans un environnement étanche à l'extrémité creuse 2e de la branche aval 2b de la pince 2 de l'outil de perçage 100 et en sens inverse dudit soufflage amont 5a. Dans d'autres modes de réalisation, les étapes 205a et 205b peuvent être inversées, le soufflage aval 5b étant déclenché avant que le perçage soit débouchant (étape 206).

La perceuse 3 avance dans le sens aval dans les pièces 1a et 1b en formant des copeaux 6 jusqu'au débouchage de l'alésage 8b, ces copeaux 6 sont extraits en amont via les goujures 3b du foret 3a puis sont évacués dans un environnement étanche. Les soufflages et l'aspiration sont maintenus (étape 208) après le débouchage et le retrait du foret de l'alésage 8b (étape 207) afin de réaliser l'évacuation complète des copeaux par aspiration. Puis les soufflages et aspiration sont arrêtés : l'opérateur peut alors procéder à la désinstallation de la pince (étape 209) et terminer ainsi le perçage avec un assemblage des pièces de structure 1a et 1b par rivetage (étape 210).

Selon certaines formes de mise en œuvre, suite à l'étape 208, le foret 3a peut être changé pour un autre de diamètre supérieur (étape 211) puis le foret 3a est de nouveau mis en place en position d'activation (étape 203) pour augmenter le diamètre de l'alésage 8b.

Après la désinstallation de la pince 2 de l'outil de perçage 100 (étape 209), celle-ci peut être déplacée (étape 212) et mise en place en différentes localisations (étape 201) pour procéder au perçage d'autres alésages puis à l'assemblage des pièces de structure 1a et 1b en différents points 8 et 8'.

L'invention n'est pas limitée aux exemples décrits et représentés.

Ainsi, les matériaux des pièces de structure utilisées peuvent être choisis entre des matériaux métalliques, des matériaux composites, du bois, du plastique et une combinaison de matériau métallique, composite, bois et plastique. De plus, le nez-machine 2k, qui maintient l'étanchéité de manière passive peut être remplacé par des systèmes actifs permettant également ce maintien par un mécanisme de serrage attaché à la branche aval de la pince, tel qu'un système hydraulique, pneumatique ou électrique. Dans le cas de matériaux composites comportant du carbone, les poussières de carbones résultantes du perçage sont entrainées par l'évacuation étanche des copeaux, et ce sans contaminer l'environnement de l'opérateur.

De plus l'outil et le procédé conviennent au perçage de deux pièces de structure mais conviennent aussi au perçage d'une seule pièce afin de la fixer ultérieurement, par exemple sur un équipement. De manière générale, l'assemblage de la ou des pièces est réalisé par rivetage, par un ensemble vis-écrou ou par tout autre moyen (agrafes, goupilles, entretoises, etc...).

Également, des types de pinces autres que de type C-clamp conviennent pour enserrer les pièces amont 1a et aval 1b, comme des pinces de type J-clamp, des pinces à ressort, pinces hydrauliques, à vérin. En particulier, la branche amont de la pince peut être constituée pour son élément principal par la perceuse entourée d'une structure étanche.

Enfin, le soufflage aval peut être déclenché à tout moment, en particulier pendant l'avancé de la perceuse ou après le débouchage à condition de maintenir le soufflage aval 5b et l'aspiration 5c suffisamment longtemps après le retrait du foret 3a. L'aspiration 5c utilisée par cet exemple de réalisation est optionnelle : l'étanchéité de l'outil combinée au soufflage et à l'organe d'évacuation 4 permet une sortie naturelle des copeaux de perçage.

## Revendications

1. Procédé de perçage d'au moins un alésage (8b) dans une ou plusieurs pièces (1a, 1b) de structure positionnées, ces pièces étant empilées puis enserrées entre des branches amont (2a) et aval (2b) d'une pince (2) d'un outil de perçage (100), la branche amont (2a) accueillant une perceuse (3) munie d'un foret (3a) et la branche aval (2b) étant creuse et ouverte sur l'extérieur, le perçage se déroulant déroute selon les étapes suivantes :
- mise en place de la pince (2) de l'outil de perçage (100) sur une localisation de perçage des pièces (1a, 1b) ;
- choix et montage du foret (3a) correspondant à un diamètre de l'alésage (8b) à percer puis mise en place du foret (3a) en position d'activation ;
**caractérisé en ce qu'**un soufflage dit amont dirigé vers les pièces (1a, 1b) à assembler fait circuler de l'air à travers le foret (3a) puis en sens inverse dans des goujures latérales (3b) s'étendant le long de ce foret (3a), et **en ce que** le perçage se déroule aussi selon les étapes suivantes :
- déclenchement du soufflage amont (5a) d'air sous pression ;
- début de l'avancée de la perceuse (3) et déclenchement du soufflage aval (5b) d'air sous pression, le soufflage aval (5b) étant réalisé dans un environnement étanche dans la branche aval (2b) creuse de la pince (2) de l'outil de perçage (100) et en sens inverse dudit soufflage amont (5a) ;
- avancée de la perceuse (3) dans le sens aval dans les pièces (1a, 1b) jusqu'au débouchage de l'alésage (8b), extraction des copeaux (6) en sens amont via les goujures (3b) du foret (3) puis évacuation de ces copeaux (6) dans un environnement étanche ;
- retrait du foret (3a) de l'alésage (8b) ;
- maintien des soufflages (5a, 5b) après débouchage et retrait du foret (3a) de l'alésage (8b), puis arrêt des soufflages ; et
- désinstallation de la pince (2) de l'outil de perçage étanche (100).

2. Procédé de perçage selon la revendication 1, dans lequel l'évacuation des copeaux (6) est réalisée par aspiration (5c).

3. Procédé de perçage selon l'une quelconque des revendications précédentes, dans lequel les pièces (1a, 1b) sont préalablement épinglées après l'empilage et assemblées après le perçage.

4. Procédé de perçage selon l'une quelconque des revendications précédentes, dans lequel le soufflage aval (5b) d'air sous pression est déclenchée avant le début de l'avancée de la perceuse (3).

5. Procédé de perçage selon l'une quelconque des revendications précédentes dans lequel suite au retrait du foret (3a) de l'alésage (8a), le foret (3a) est changé pour un autre de diamètre supérieur ;

6. Procédé de perçage selon l'une quelconque des revendications précédentes dans lequel suite à la désinstallation de la pince (2) de l'outil de perçage (100), celle-ci est déplacée et mise en place en différentes localisation ;

7. Outil de perçage (100) de mise en œuvre du procédé selon l'une quelconque des revendications précédentes, d'au moins une pièce (1a, 1b) de structure comportant la perceuse (3) équipée du foret (3a) muni des goujures latérales (3b) d'extraction de copeaux (6), comportant de plus la pince (2) à deux branches (2a, 2b) enserrant la ou les pièce(s) (1a, 1b) par une extrémité ouverte sur chacune des branches (2a, 2b), **caractérisé en ce que** la perceuse est équipée du moyen de soufflage amont (5a) d'air sous pression à travers un axe central (30a) du foret (3a), **en ce que** la branche aval (2b) accueille de manière étanche par son extrémité ouverte (2e) un organe de soufflage aval (5b) d'air sous pression dans le sens inverse et avec une pression de travail au moins égale à celle du soufflage amont (5a) et **en ce que** l'outil de perçage (100) est muni d'un organe étanche d'évacuation et de récupération de copeaux (6) coopérant avec les goujures latérales (3b) d'extraction et d'un nez-machine (2k) étanche agencé à l'extrémité ouverte de la branche amont (2a) et au contact de la pièce (1a) de structure à percer.

8. Outil de perçage selon la revendication précédente dans lequel la rigidité du nez-machine (2k) est inférieure à celle de la ou des pièces (1a, 1b) de structure à percer et/ou un mécanisme de serrage le maintient sur la ou les pièces (1a, 1b) de structure choisi parmi un système hydraulique, pneumatique et électrique.

9. Outil de perçage selon l'une quelconque des revendications 7 et 8, dans lequel l'air des soufflages amont (5a) et aval (5b) provient d'un même réseau d'air comprimé.

10. Outil de perçage selon l'une quelconque des revendications 7 à 9, dans lequel une dépression d'au moins 0,1 bar est établie dans l'organe d'évacuation (4).

11. Outil de perçage selon l'une quelconque des revendications 7 à 10, dans lequel le soufflage d'air contient du lubrifiant.

12. Outil de perçage selon l'une quelconque des revendications 7 à 11, dans lequel la pince (2) est choisie parmi une pince de type C-Clamp, de type J-Clamp et une pince à ressort.

## Patentansprüche

1. Verfahren zum Bohren mindestens einer Bohrung (8b) in ein oder mehrere positionierte Bauteile (1a, 1b), wobei diese Teile gestapelt und anschließend zwischen den vorderen (2a) und hinteren (2b) Schenkeln einer Klemmvorrichtung (2) eines Bohrwerkzeugs (100) eingespannt werden, wobei der vordere Schenkel (2a) einen Bohrer (3), der mit einem Bohreinsatz (3a) versehen ist, aufnimmt und der hintere Schenkel (2b) hohl und nach außen offen ist, wobei das Bohren in den folgenden Schritten erfolgt:
- Ansetzen der Klemmvorrichtung (2) des Bohrwerkzeugs (100) an einer Bohrstelle der Teile (1a, 1b);
- Auswahl und Montage des Bohreinsatzes (3a), der einem Durchmesser der zu bohrenden Bohrung (8b) entspricht, und anschließendes Ansetzen des Bohreinsatzes (3a) in der Aktivierungsposition;
**dadurch gekennzeichnet, dass** ein zu den zusammenzubauenden Teilen (1a, 1b) gerichtetes, so genanntes Vorblasen Luft durch den Bohreinsatz (3a) und anschließend in umgekehrter Richtung in seitliche, sich entlang dieses Bohreinsatzes (3a) erstreckende Nuten (3b) strömen lässt, und dass das Bohren auch in folgenden Schritten erfolgt:
- Auslösen des Vorblasens (5a) von Druckluft:
- Beginn des Vorschubs des Bohrers (3) und Auslösen des Hinterblasens (5b) von Druckluft, wobei das Hinterblasen (5b) in einer dichten Umgebung in dem hohlen hinteren Schenkel (2b) der Klemmvorrichtung (2) des Bohrwerkzeugs (100) und entgegen der Richtung des Vorblasens (5a) erfolgt;
- Vorschub des Bohrers (3) nach hinten in die Teile (1a, 1b) bis zum Durchbohren der Bohrung (8b), Absaugen der Späne (6) nach vorne über die Nuten (3b) des Bohreinsatzes (3) und anschließender Abtransport dieser Späne (6) in eine dichte Umgebung;
- Herausziehen des Bohreinsatzes (3a) aus der Bohrung (8b);
- Aufrechterhalten der Blasvorgänge (5a, 5b) nach dem Durchbohren und Herausziehen des Bohreinsatzes (3a) aus der Bohrung (8b), dann Abschalten der Blasvorgänge; und
- Abnehmen der Klemmvorrichtung (2) von dem dichten Bohrwerkzeug (100).

2. Bohrverfahren nach Anspruch 1, bei dem der Abtransport der Späne (6) durch Absaugen (5c) erfolgt.

3. Bohrverfahren nach einem der vorhergehenden Ansprüche, bei dem die Teile (1a, 1b) nach dem Stapeln vorab fixiert und nach dem Bohren zusammengebaut werden.

4. Bohrverfahren nach einem der vorhergehenden Ansprüche, bei dem das Hinterblasen (5b) von Druckluft vor Beginn des Vorschubs des Bohrers (3) ausgelöst wird.

5. Bohrverfahren nach einem der vorhergehenden Ansprüche, bei dem nach dem Herausziehen des Bohreinsatzes (3a) aus der Bohrung (8a) der Bohreinsatz (3a) gegen einen anderen mit größerem Durchmesser ausgetauscht wird.

6. Bohrverfahren nach einem der vorhergehenden Ansprüche, bei dem nach dem Abnehmen der Klemmvorrichtung (2) von dem Bohrwerkzeug (100) diese versetzt und an einer andere Stelle angesetzt wird.

7. Bohrwerkzeug (100) zur Durchführung des Verfahrens nach einem der vorhergehenden Ansprüche an mindestens einem Bauteil (1a, 1b), umfassend den Bohrer (3), der mit dem Bohreinsatz (3a), aufweisend seitliche Nuten (3b) zum Abtransport von Spänen (6), versehen ist, ferner umfassend die Klemmvorrichtung (2) mit zwei Schenkeln (2a, 2b), die das oder die Teile (1a, 1b) mit einem offenen Ende an jedem der Schenkel (2a, 2b) umgreift, **dadurch gekennzeichnet, dass** der Bohrer mit einer Einrichtung (5a) zum Vorblasen von Druckluft durch eine Mittelachse (30a) des Bohreinsatzes (3a) versehen ist, dass der hintere Schenkel (2b) an seinem offenen Ende (2e) ein Hinterblasorgan (5b) für Druckluft in umgekehrter Richtung und mit einem Arbeitsdruck dicht aufnimmt, der mindestens dem des Vorblasens (5a) entspricht, und dass das Bohrwerkzeug (100) mit einem dichten Organ zur Entleerung und Rückgewinnung von Spänen (6) ausgestattet ist, das mit den seitlichen Nuten (3b) zum Abtransport zusammenwirkt, und einer dichten Maschinennase (2k), die an dem offenen Ende des vorderen Schenkels (2a) und in Kontakt mit dem zu bohrenden Bauteil (1a) angeordnet ist.

8. Bohrwerkzeug nach dem vorhergehenden Anspruch, bei dem die Steifigkeit der Maschinennase (2k) geringer ist als die des oder der zu bohrenden Bauteile (1a, 1b) und/oder ein Spannmechanismus sie an dem oder den Bauteilen (1a, 1b) hält, der aus einem hydraulischen, pneumatischen und elektrischen System ausgewählt ist.

9. Bohrwerkzeug nach einem der Ansprüche 7 und 8, wobei die Luft für das Vorblasen (5a) und das Hinterblasen (5b) aus demselben Druckluftnetz stammt.

10. Bohrwerkzeug nach einem der Ansprüche 7 bis 9, wobei in dem Abtransportorgan (4) ein Unterdruck von mindestens 0,1 bar hergestellt wird.

11. Bohrwerkzeug nach einem der Ansprüche 7 bis 10, wobei die Ausblasluft Schmiermittel enthält.

12. Bohrwerkzeug nach einem der Ansprüche 7 bis 11, wobei die Klemmvorrichtung (2) aus einer C-Zwinge, einer J-Zwinge und einer Federklemme ausgewählt ist.

## Claims

1. Method for drilling at least one bore (8b) in one or more positioned structural parts (1a, 1b), these parts being stacked then clamped between an upstream branch (2a) and a downstream branch (2b) of a clamp (2) of a drilling tool (100), the upstream branch (2a) receiving a drilling machine (3) equipped with a drill bit (3a) and the downstream branch (2b) being hollow and open to the outside, the drilling taking place according to the following steps:
- positioning the clamp (2) of the drilling tool (100) on a drilling location of the parts (1a, 1b);
- selection and assembly of the drill bit (3a) corresponding to a diameter of the bore (8b) to be drilled then positioning of the drill bit (3a) in the activation position;
**characterized in that** a so-called upstream blowing directed towards the parts (1a, 1b) to be assembled circulates air through the drill bit (3a) then in the opposite direction in lateral grooves (3b) extending along this drill bit (3a), and **in that** the drilling also takes place according to the following steps:
- triggering of the upstream blowing (5a) of pressurized air;
- start of the advance of the drilling machine (3) and triggering of the downstream blowing (5b) of pressurized air, the downstream blowing (5b) being carried out in an airtight environment in the hollow downstream branch (2b) of the clamp (2) of the drilling tool (100) and in the opposite direction to said upstream blowing (5a);
- advancement of the drilling machine (3) in the downstream direction in the parts (1a, 1b) until the bore (8b) is cleared, extraction of the chips (6) in the upstream direction via the grooves (3b) of the drill bit (3) then evacuation of these chips (6) in an airtight environment;
- removal of the drill bit (3a) from the bore (8b);
- maintaining the blowings (5a, 5b) after unblocking and removing the drill bit (3a) from the bore (8b), then stopping the blowings; and
- uninstallation of the clamp (2) from the airtight drilling tool (100).

2. Drilling method according to claim 1, wherein the evacuation of the chips (6) is carried out by suction (5c).

3. Drilling method according to any one of the preceding claims, wherein the parts (1a, 1b) are previously pinned after stacking and assembled after drilling.

4. Drilling method according to any one of the preceding claims, wherein the downstream blowing (5b) of pressurized air is triggered before the start of the advance of the drill (3).

5. Drilling method according to any preceding claim wherein following removal of the drill bit (3a) from the bore (8a), the drill bit (3a) is changed to one of larger diameter.

6. Drilling method according to any one of the preceding claims, wherein following the uninstallation of the clamp (2) from the drilling tool (100), the latter is moved and placed in different locations.

7. Drilling tool (100) for implementing the method according to any one of the preceding claims, of at least one structural part (1a, 1b) comprising the drilling machine (3) equipped with the drill bit (3a) provided with the lateral grooves (3b) for extracting chips (6), further comprising the clamp (2) with two branches (2a, 2b) gripping the part(s) (1a, 1b) by an open end on each of the branches (2a, 2b), **characterized in that** the drilling machine (3) comprises the upstream blowing (5a) means of pressurized air through a central axis (30a) of the drill bit (3a) and **in that** the downstream branch (2b) receives in an airtight manner by its open end (2e) a downstream blowing (5b) member of pressurized air in the opposite direction and with a working pressure at least equal to that of the upstream blowing (5a) and **in that** the drilling tool (100) is equipped with an airtight chip (6) evacuation and recovery member cooperating with the lateral extraction grooves (3b) and an airtight machine nose (2k) arranged at the open end of the upstream branch (2a) and in contact with the structural part (1a) to be drilled.

8. Drilling tool according to the preceding claim wherein the rigidity of the machine nose (2k) is less than that of the structural part(s) (1a, 1b) to be drilled and/or a clamping mechanism holds it on the structural part(s) (1a, 1b) chosen from a hydraulic, pneumatic and electric system.

9. Drilling tool according to any one of claims 7 and 8, wherein the air from the upstream blowing (5a) and downstream blowing (5b) comes from the same compressed air network.

10. A drilling tool according to any one of claims 7 to 9, wherein a depression of at least 0.1 bar is established in the evacuation device (4).

11. A drilling tool according to any one of claims 7 to 10, wherein the air blowing contains lubricant.

12. A drilling tool according to any one of claims 7 to 11, wherein the clamp (2) is selected from a C-Clamp type clamp, a J-Clamp type clamp and a spring clamp.
